# EUROPEAN PATENT APPLICATION

(11) **EP 4 606 217 A1**
(43) Date of publication of application: **27.08.2025**
(21) Application number: 25158973.5
(22) Date of filing: 19.02.2025
(51) Int. Cl.: A01M 1/02, A01M 1/10, A01M 1/20

(54) **BAITED TRAP FOR INSECTS WITH PERIMETER CLOSURE**

(30) Priority: 20.02.2024 ES 202430331 U
(71) Applicant: ZENIT Estudio de Diseño e Innovación S.L., 46010 Valencia (ES)
(72) Inventor: BLASCO FEO, VICENTE, 46010 VALENCIA (ES)
(74) Representative: Soler Lerma, Santiago

(57) **Abstract**

The invention relates to an insect trap which comprises a container that, in turn, comprises a base and a cover suitable for housing the bait and with anchoring means therebetween, where this container has a series of holes, by way of accesses where the effluvia attractive to insects exit , where insects can ingress and egress after eating the bait.

## Description

The invention, as indicated, relates to an insect trap which comprises a box or container with a diaphanous interior geometry, wherein this box comes sealed during shipping and storage operations and contains a bait inside.

The container comprises a base and a cover and anchoring means between them, where the cover has access windows that connect the inside with the outside of the trap, facilitating the insects' access to its interior and their subsequent egress.

One of the problems to be solved with this trap is the possibility of using a viscous bait since this increases the amount of effluvia and, therefore, the ability to attract ants.

Another objective is the possibility of, even with viscous bait, being able to use the trap both horizontally and vertically without the risk of leaking or spilling the bait.

With this trap, a larger bait surface is also obtained since it extends through the base of the container, which is diaphanous, which facilitates the generation of effluvia and allows a greater number of ants eating at the same time.

On the other hand, when the trap is sealed, the need to bag it for storage and shipping is avoided, with the consequent reduction of plastic.

A further advantage that is obtained with this trap is the possibility of producing it in a production line that does not have a sealing station and this is thanks to an anchoring system between base and cover that allows its easy handling to remove it from the production line, perform its sealing in a station external to the line and then put it back into the production line.

The geometry that allows this anchoring facilitates the access of the ants to the interior of the trap and, moreover, gives solidity to the assembly, allowing a large diaphanous interior space and a strength of the trap against vertical pressures, preventing its breakage.

The technical field to which it belongs is baited traps for insects.

### BACKGROUND

Insect traps are widely known that have a container that houses bait inside where the insects are attracted by said bait and access the interior of the container through windows that enable the exit of the effluvia produced by the bait.

Proof of this is the patent of the same applicant ES2619115 where containers are shown that house bait inside and have ingress and egress access for insects.

Or patent US20060191189 showing an insect trap that attaches to the floor or any horizontal surface, comprising an insecticidal activatable bait station including a base, the base having an integral structured reservoir provided therein, a series of piercing spikes extend upwardly from the base of the reservoir, and are provided for piercing the seal of a container holding a supply of liquid insecticide, to allow for the deposition into the base when prepared for usage. A series of columns extend upright from the base, holds the containerised liquid either in an elevated position, as during shipment, storage, display, or while awaiting its usage, but that when the liquid container is lowered, and pierced, the container is held into its lowered position, its seal having been pierced, for deposition of its liquid insecticide into the base reservoir, for consumption by any insects. Convenient ramps are provided to allow access through slots into the reservoir, when attracting any insect located nearby.

Also patent US1700517, which shows a trap with a bait and an insecticidal toxic substance where a box is centrally located inside, closed during the shipping and storage processes, which contains a bait element.

Utility model U201000932 shows a liquid bait located inside a capsule and, when putting the device into use, this capsule is broken mechanically by the pressure of a mechanism. This system does not prevent that, once in use, the bait can come out of the trap if it changes position, with the risks that this entails for children or animals.

Patent US4793093 contains a solution to keep the bait in the central portion; this patent shows a trap made of thin plastic material, which has a base with a central well that houses the bait and a portion that includes a bowl-shaped member directed downwards, which protrudes inwards against the upper surface of the bait to help keep it in the central well.

None of the above inventions shows a bait trap that has a larger space in the container that allows a larger amount of bait and, at the same time allows the entry of more insects inside, where the anchoring means also act as means of access of the insects inside the trap.

Nor is it evident in the aforementioned inventions that the trap can be disposed both horizontally and vertically, preventing the bait from coming out of its interior.

In addition, for the purposes of manufacturing the trap, it is possible to have the option of sealing the device on the production line itself or outside it without affecting the integrity of the contents of the trap in those processes.

### DESCRIPTION OF THE INVENTION

The invention relates to an insect trap that has a container suitable for housing the bait, where this container has a series of holes, by way of accesses where the effluvia attractive to the insects exit, the insects can ingress and can egress after eating the bait.

The device comprises:
A container and a bait wherein the container comprises a cover and a base where:
- The cover has an upper cant wherefrom a skirt descends towards the perimeter of the trap. This cant has windows that are sealed during shipping and storage and that are opened for use, thanks to a pre-established rupture zone, allowing the exit of the attracting effluvia and the ingress and egress of the insects. This cover has anchoring means to the base.
- The base has a diaphanous surface, anchoring means to the cover, preferably, elevations that project vertically on meeting the lower face of the cover. On the perimeter of the base, a skirt that rises from the edge thereof towards the interior.

When the cover is adjusted on the base, one and the other are fixed by the anchoring means and the container inside which the bait is housed is formed in that way.

The upper part of the elevations projecting from the base fits together with housings disposed on the lower face of the cover. Once fitted together, these elevations are on the vertical of the windows and, in addition to joining the base and cover, they connect the windows with the bait allowing easy access for the insects, and give robustness to the trap against vertical pressures.

To do this, one of its faces has the shape of a step, ramp or any other geometry that facilitates the transit of insects from the windows to the bait and vice versa.

These elevations that act as columns, access and joining means, allow the trap to be easily handled to be taken to a sealing station outside the production line, thanks to the anchoring means that allow its easy handling enabling its production in lines that do not comprise, in themselves, a sealing station.

In a preferred embodiment, the anchoring means comprise grooves arranged on the elevations of the base that are coincident with the geometry of a series of internal partitions arranged on the inside of the cover allowing the coupling between base and cover being coincident with both the eyelets and the windows of the cover.

The perimeter of the skirt of the cover and the skirt of the base are vertically aligned and have a rim that facilitates perfect sealing between the base and the cover, generating an airtight container.

The fact that the interior of the container is diaphanous makes it possible to take advantage of the space to house a greater amount of bait, as well as allowing access to a greater number of insects inside, improving the scope and efficiency in relation to conventional traps.

The geometry of the device and the sealing of its perimeter allows the trap to be used both horizontally and vertically.

One of the advantages of this device for manufacturing purposes is the implementation of the seal outside the production line, since the entire assembly of the trap can be moved to a point outside the production line for sealing, thanks to the action of the anchoring means that hold the cover and base together until sealing.

### DESCRIPTION OF THE FIGURES

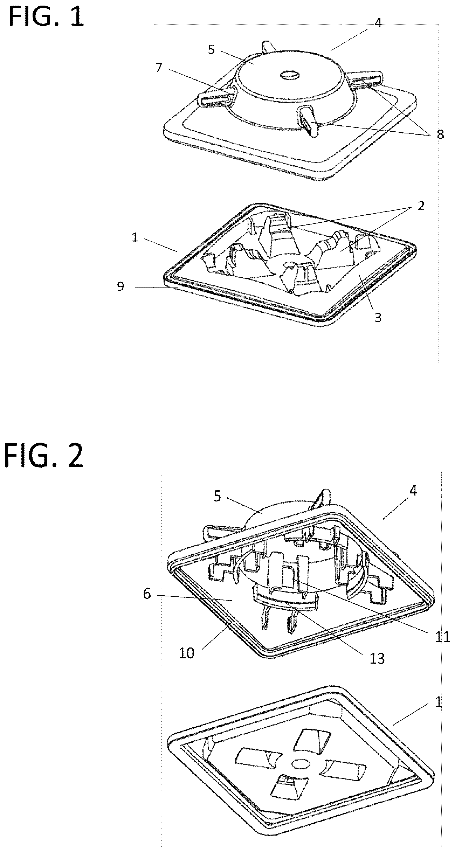

Fig. 1 shows an exploded view of the device, the cover (4) can be seen with the cant (5), the interior of the base (1) with the elevations (2) projected vertically and a perimeter skirt (3) with an outer rim (9). Sealed windows (7) can also be seen on the cover, which have break zone levers (8) for putting them into use.
Fig. 2 shows a different, exploded view of the device where the interior of the cover (4) can be seen with the cant (5) wherefrom a skirt (6) with complementary geometry to the perimeter skirt of the base (1) projects towards its perimeter. This skirt (6) of the cover has a thickening (10) on its perimeter. The eyelets (11) and internal partitions (13) suitable for housing and retaining the end of the base elevations (1) can also be seen.

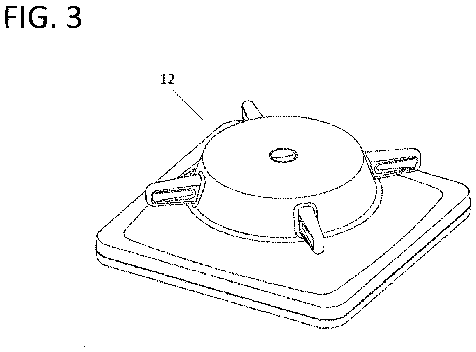

Fig. 3 shows the assembly of the base and the cover together forming the airtight container (12).

### AN EMBODIMENT OF THE INVENTION

The following is an embodiment of the invention that is not limiting but merely explanatory.

The invention relates to an insect trap comprising a container (12) and a bait therein. The container has a series of windows (7) that allow the exit of the insect-attracting effluvia as well as allowing the insects to access the bait.

The device comprises
- the container (12) and the bait, wherein the container comprises a base (1) and a cover (4):
   ∘ The base (1) comprises a diaphanous surface, a series of elevations (2) projected vertically from the floor of the base and which rise to meet the lower face of the cover (4) and, on its perimeter, a perimeter skirt (3).
   ∘ The cover (4) has an upper cant (5), a skirt (6) descending towards the perimeter, said skirt (6) being geometrically complementary with the perimeter skirt (3) of the base (1). The cant (5) has a series of windows (7) which are sealed during the shipping and storage processes and for their use are opened by a rupture zone (8) that allows the effluvia to exit.

The container (12) is formed with the joining of the cover (4) and the base (1).

The elevations (2) are in the form of a step where their upper part fits together with eyelets (11) and internal partitions (13) located on the lower face of the cover (4) where once the base and cover elevations (2) are fitted together, they are joined but not sealed.

These elevations are in the vertical of the windows (7) joining the base (1) with the cover (4), and in turn joining the windows (7) with the bait creating a path for the easy access of the insects to its interior.

The cover has a perimeter thickening (10) that coincides with and overlaps the rim (9) of the perimeter skirt (3) of the base, facilitating the perfect sealing between the base (1) and the cover (4), generating an airtight container.

The elevations (2) that act as columns, access and joining means, allow the assembly of the trap to be easily handled in order to be moved out of the production line to be sealed, allowing its manufacture in production lines that do not comprise sealing stations.

## Claims

1. BAITED TRAP FOR INSECTS WITH PERIMETER CLOSURE, comprising a container (12) that houses the bait **characterised in that** it comprises:
- A cover (4) that has an upper cant (5) wherefrom a skirt (6) that descends towards the perimeter of the trap starts. The cant (5) has windows (7) with break zone flanges. The cover (4) has anchoring means with the base (1) and with a perimeter thickening (10).
- A base (1) with a diaphanous surface, elevations (2) that project vertically from the floor of the base to meet the lower face of the cover (4), a perimeter skirt (3) geometrically complementary to the skirt (6) of the cover. The base comprises a perimeter rim (9) vertically coincident with the thickening (10) of the cover.
- Anchoring means comprising elevations (2) that project vertically from the floor of the base to meet the lower face of the cover (4) and eyelets (11) on the inner face of the cover.
Where the cover (4) is disposed on the base (1) and one and the other are joined by action of the anchoring means and sealed by their perimeter.

2. BAITED TRAP FOR INSECTS WITH PERIMETER CLOSURE according to claim 1, **characterised in that** the anchoring means of the cover (4) further comprises internal partitions (13).

3. BAITED TRAP FOR INSECTS WITH PERIMETER CLOSURE according to claim 1, **characterised in that** the elevations (2) have the form of a step.

4. BAITED TRAP FOR INSECTS WITH PERIMETER CLOSURE according to claim 1, **characterised in that** the elevations (2) are disposed in the vertical of the windows (7).
